# EUROPEAN PATENT SPECIFICATION

(11) **EP 3 875 524 B1**
(45) Date of publication and mention of the grant of the patent: **07.08.2024**
(21) Application number: 18938711.1
(22) Date of filing: 31.10.2018
(51) Int. Cl.: C08K 3/26, C08K 9/04, C08K 5/5415, C08K 3/30, C08L 83/04, C08L 23/08, C08L 23/26, C08L 23/16, C08L 25/12, C08K 5/00, C08G 77/04, C08K 5/098, C08K 5/526, C08K 5/5425, C08L 51/06, C08K 5/134

(54) **HIGHLY FLAME RETARDANT POLYMER COMPOSITE COMPOSITION AND POLYMER COMPOSITE RESIN COMPRISING SAME**
HOCHFLAMMHEMMENDE POLYMERVERBUNDZUSAMMENSETZUNG UND POLYMERVERBUNDHARZ DAMIT
COMPOSITION COMPOSITE POLYMÈRE HAUTEMENT IGNIFUGE ET RÉSINE COMPOSITE POLYMÈRE EN COMPRENANT

(43) Date of publication of application: 08.09.2021
(73) Proprietor: HDC Hyundai Engineering Plastics Co., Ltd., Dangjin-si Chungcheongnam-do 31703 (KR)
(72) Inventor: KONG, Jung Ho, Daejeon 34022 (KR); PARK, Kyu Hwan, Yongin-si Gyeonggi-do 16890 (KR); JUNG, Chun Sik, Hwaseong-si Gyeonggi-do 18472 (KR); KIM, Dong Hak, Suwon-si Gyeonggi-do 16679 (KR); KIM, Gyu Nam, Yongin-si Gyeonggi-do 17079 (KR)
(74) Representative: WSL Patentanwälte Partnerschaft mbB
(86) International application number: PCT/KR2018/013121
(87) International publication number: WO 2020/091109

(56) References cited:
- EP-A1- 1 862 496
- WO-A1-2008/112393
- KR-A- 20000 067 127
- KR-A- 20010 057 665
- KR-A- 20090 015 945
- KR-A- 20090 030 505
- KR-B1- 100 978 777
- US-A1- 2011 253 420

## Description

### [Technical Field]

The present invention relates to a highly flame-retardant polymer composite composition having high flame retardancy, excellent mechanical properties, and superior workability and appearance, and a highly flame-retardant polymer composite resin containing the same.

### [Background Art]

Wires have conventionally been manufactured using polyvinyl chloride (PVC) composite materials as general flame-retardant materials for insulating and coating wires. However, regulations governing the use of these materials have become more stringent because toxic gases are released during combustion thereof.

Accordingly, the use of environmentally friendly non-halogen flame-retardant materials to replace polyvinyl chloride composite materials is increasing. Non-halogen flame-retardant materials broadly include inorganic hydroxide polymer composite materials including aluminum hydroxide and magnesium hydroxide, phosphorus-based flame-retardant polymer composite materials including phosphorus-based flame retardants, and the like.

Inorganic hydroxide polymer composite materials are environmentally friendly, but have poorer flame retardancy than polyvinyl chloride composite materials. Therefore, inorganic hydroxide is inevitably added in an excessive amount. In this case, wire extrusion workability as well as mechanical properties such as tensile strength and elongation of insulating and coating materials are deteriorated.

The phosphorus-based flame-retardant polymer composite material exhibits excellent flame retardancy and mechanical properties, but has problems such as high price and wire whitening due to precipitation of the flame retardant on the surface of the wire.

Korean Patent No. 10-1630109 (Patent Document 1) discloses an environmentally friendly flame-retardant polymer composition for wires which contains a combination of calcium carbonate and silicon gum with a crossable terpolymer including an ethylene monomer unit, a comonomer unit including a silane group, and a comonomer including a polar group. The comonomer unit of Patent Document 1 has a structure in which a silane group is grafted into an ethylene chain, and thus has a problem in that the appearance is deteriorated when forming a wire due to pre-crosslinking due to the presence of water mist. In addition, the oxygen index is less than 40%, so flame retardancy is not satisfactory and applicability thereof is thus limited.

Korean Patent No. 10-0737615 (Patent Document 2) discloses a flame-retardant composition containing polypropylene, modified polypropylene grafted with maleic anhydride or silane, a thermoplastic elastomer, a modified elastomer grafted with maleic anhydride, and magnesium hydroxide. The modified resin of Patent Document 2 was used to improve compatibility with magnesium hydroxide and thus mechanical properties, but did not greatly contribute to flame retardancy. As a result, the oxygen index is less than 35% and the flame retardancy is not satisfactory. In addition, workability is limited due to the low decomposition temperature of magnesium hydroxide, specifically about 300°C.

EP 1862496 A1 discloses a flame retardant polymer composition comprising (A) a polyethylene, (B) a silicone-group containing compound, (C) an inorganic filler material, and (D) a polypropylene in an amount of 0.1 to 10 wt.% with respect to the total composition, and an article comprising said flame retardant polymer composition, in particular a wire or cable comprising a layer made of said flame retardant composition.

US 2011/0253420 A1 discloses a flame retardant polymer composition comprising (A) an ethylene copolymer comprising polar comonomer units, (B) a silicone-group containing compound, (C) an inorganic filler material, and (D) an ethylene homopolymer or a copolymer of ethylene with one or more other alpha-olefin comonomer units, wherein the polymer composition has a melting enthalpy of at least 78 J/g, an article, in particular a wire or cable, comprising said composition and the use of an ethylene homo- or copolymer in a flame retardant layer of a wire or cable for improving the mechanical properties of the wire or cable.

WO 2008/112393 A1 discloses a composition useful as a wire or cable insulation or sheathing layer, the composition comprising (i) an inorganic flame retardant, e.g., aluminum trihydroxide (ATH), (ii) ethylene ethyl acetate (EEA) or ethylene butyl acrylate (EBA), (iii) a homogeneous polyethylene, (iv) an ethylenic resin modified with an organo-functional group, e.g., maleic anhydride (MAH) grafted polyethylene, (v) a silicone polymer, and optionally, (vi) a smoke suppressant. The insulation or sheathing layer comprising the composition is described to exhibit good resistance to stress and/or thermal cracking.

### [Disclosure]

### [Technical Problem]

Therefore, the present invention has been made in view of the above problems, and it is one object of the present invention to provide a polymer composite composition used as a material for insulating and coating wires that exhibits excellent flame retardancy, mechanical properties, extrusion appearance and workability.

It is another object of the present invention to provide a composite resin having high flame retardancy containing the polymer composite composition.

The objects of the present invention are not limited to those described above. The objects of the present invention will be clearly understood from the following description and can be implemented by the means defined in the claims and combinations thereof.

### [Technical Solution]

In accordance with the present invention, the above and other objects can be accomplished by the provision of a flame-retardant polymer composite composition as defined in claim 1 and a flame-retardant polymer composite resin comprising the composition.

The flame-retardant polymer composite composition of the present invention comprises:
20 to 40% by weight of a polar polyolefin resin;
10 to 40% by weight of a thermoplastic elastomer;
30 to 60% by weight of a metal carbonate;
0.5 to 3% by weight of an organosilane;
1 to 5% by weight of a sulfur-based flame retardant;
0.3 to 5% by weight of a silicone fluid or gum;
0.1 to 5% by weight of an antioxidant; and
0.1 to 5% by weight of a lubricant,
wherein the polar polyolefin resin comprises:
a polyolefin resin selected from the group consisting of polyethylene, polypropylene, an ethylene-α-olefin copolymer, an ethylene-vinyl acetate copolymer, an ethylene-propylene-diene copolymer, and combinations thereof; and a polar functional group, and
wherein the thermoplastic elastomer is selected from the group consisting of an ethylene-α-olefin copolymer, an ethylene-vinyl acetate copolymer, an ethylene-propylene-diene copolymer, a styrene-ethylene-butadiene-styrene copolymer, styrene-butadiene-styrene, and combinations thereof, and
wherein the organosilane is selected from the group consisting of vinyl trimethoxysilane, vinyl triethoxysilane, vinyl tributoxysilane, propyl trimethoxysilane, propyl triethoxysilane, and combinations thereof, and
wherein the sulfur-based flame retardant is metal sulfate selected from the group consisting of calcium sulfate, magnesium sulfate, aluminum sulfate, barium sulfate, and combinations thereof.

The polar polyolefin resin may have a structure in which a polar monomer selected from the group consisting of maleic anhydride, acrylic acid, glyceryl methacrylate, and combinations thereof is grafted into the polyolefin resin.

The metal carbonate may be selected from the group consisting of magnesium carbonate, calcium carbonate and combinations thereof.

The flame-retardant polymer composite composition may further include a nitrogen-based flame retardant.

The silicone fluid or gum may be polydimethylsiloxane, and may be used in the form of a raw material or a master batch.

The antioxidant may be selected from the group consisting of: phenolic antioxidants selected from the group consisting of pentaerythrityl tetrakis(3-(3,5-di-tert-butyl-4-hydroxyphenyl)-propionate), 2,3-bis[[3-[3,5-di-tert-butyl-4-hydroxyphenyl]propionyl]]propionohydrazide, 2,2'-thiodiethylbis-[3-(3,5-di-tert-butyl-4-hydroxyphenyl)-propionate] and combinations thereof; phosphorus-based antioxidants including tris(2,4-di-tert-butylphenyl)phosphite; sulfur-based antioxidants including distearyl thiodipropionate; and combinations thereof.

The lubricant may be selected from the group consisting of paraffin, polyethylene wax, alkaline earth metal stearate, a vinylidene fluoride-hexafluoropropylene polymer, polyester polyol, erucamide, oleic amide, and combinations thereof.

The flame-retardant polymer composite composition may further include a colorant selected from the group consisting of carbon black, titanium dioxide, pigments, and combinations thereof.

The flame-retardant polymer composite composition may include 20 to 40% by weight of the polar polyolefin resin, which is a polyethylene grafted with maleic anhydride, 10 to 40% by weight of the thermoplastic elastomer, which is an ethylene-octene copolymer, 30 to 60% by weight of the metal carbonate, which is the calcium carbonate coated with stearic acid, 0.5 to 3% by weight of the organosilane, which is vinyltrimethoxysilane, 1 to 5% by weight of the calcium sulfate, which is the sulfur-based flame retardant, 0.3 to 5% by weight of the silicone fluid or gum, which is polydimethylsiloxane in the form of the master batch, 0.1 to 5% by weight of the antioxidant including pentaerythrityl tetrakis, tris(2,4-di-tert-butylphenyl)phosphite, 2,3-bis[[3-[3,5-di-tert-butyl-4-hydroxyphenyl]propyl]]propionohydrazide and distearyl thiodipropionate, and 0.1 to 5% by weight of the lubricant, which is zinc stearate.

### [Advantageous Effects]

The polymer composite resin provided by the present invention exhibits high flame retardancy corresponding to an oxygen index of 40% or more, and excellent mechanical properties, extrusion appearance and workability, and is therefore useful as a material for insulation and coating.

In addition, the polymer composite resin provided by the present invention, which is a non-halogen-based flame-retardant composite resin, is useful as a novel environmentally friendly material capable of meeting increasingly stringent worldwide environmental regulations (EP: Restriction of Hazardous Substances (RoHS) that restricts the sales of electrical and electronic products containing six hazardous materials (Pb, Cd, Cr⁶⁺, Hg, PBB, PBDE) in the European market since July 01, 2006; USA: restriction of the use of flame retardant PBDEs since 2008; JP: enhancement of J-MOSS environmental regulations since 2006; KR: Environmental mark system, eco-friendly product law).

The effects of the present invention are not limited to those mentioned above. It should be understood that the effects of the present invention include all effects that can be inferred from the description of the present invention.

### [Best Mode]

The objects described above, and other objects, features and advantages of the present invention will be clearly understood from the following preferred embodiments with reference to the attached drawings. However, the present invention is not limited to the embodiments and may be embodied in different forms. The embodiments are suggested only to offer a thorough and complete understanding of the disclosed context and to sufficiently inform those skilled in the art of the technical concept of the present invention.

Like numbers refer to like elements throughout the description of the figures. In the drawings, the sizes of structures are exaggerated for clarity. It will be understood that, although the terms "first", "second", etc. may be used herein to describe various elements, these elements should not be construed to be limited by these terms, which are used only to distinguish one element from another. For example, within the scope defined by the present invention, a "first" element may be referred to as a "second" element, and similarly, a "second" element may be referred to as a "first" element. Singular forms are intended to include plural forms as well, unless the context clearly indicates otherwise.

It will be further understood that the terms "comprises" and/or "has", when used in this specification, specify the presence of stated features, integers, steps, operations, elements, components or combinations thereof, but do not preclude the presence or addition of one or more other features, integers, steps, operations, elements, components, or combinations thereof. In addition, it will be understood that when an element such as a layer, film, region or substrate is referred to as being "on" another element, it can be directly on the other element, or an intervening element may also be present. It will also be understood that when an element such as a layer, film, region or substrate is referred to as being "under" another element, it can be directly under the other element, or an intervening element may also be present.

Unless the context clearly indicates otherwise, all numbers, figures and/or expressions that represent ingredients, reaction conditions, polymer compositions and amounts of mixtures used in the specification are approximations that reflect various uncertainties of measurement occurring inherently in obtaining these figures, among other things. For this reason, it should be understood that, in all cases, the term "about" should be understood to modify all numbers, figures and/or expressions. In addition, when numerical ranges are disclosed in the description, these ranges are continuous, and include all numbers from the minimum to the maximum, including the maximum within each range, unless otherwise defined. Furthermore, when the range refers to an integer, it includes all integers from the minimum to the maximum including the maximum within the range, unless otherwise defined.

In one aspect, the present invention is directed to a flame-retardant polymer composite composition including a polar polyolefin resin, a thermoplastic elastomer, a metal carbonate, an organosilane, a sulfur-based flame retardant, a silicone fluid or gum, an antioxidant, and a lubricant.

The flame-retardant polymer composite composition of the present invention includes 20 to 40% by weight of the polar polyolefin resin, 10 to 40% by weight of the thermoplastic elastomer, 30 to 60% by weight of the metal carbonate, 0.5 to 3% by weight of the organosilane, 1 to 5% by weight of the sulfur-based flame retardant, 0.3 to 5% by weight of the silicone fluid or gum, 0.1 to 5% by weight of the antioxidant, and 0.1 to 5% by weight of the lubricant.

In addition, the highly flame-retardant polymer composition may further include a nitrogen-based flame retardant, in addition to a sulfur-based flame retardant.

Each component constituting the highly flame-retardant polymer composite composition according to the present invention will be described in more detail below.

### Polar polyolefin resin

The polar polyolefin resin is a modified resin prepared by introducing a polar functional group into a polyolefin resin. The polar polyolefin resin can be obtained by grafting a polar monomer containing a polar functional group into the polyolefin resin through an extrusion reaction.

As a result, the polar polyolefin resin may include a polyolefin resin as a main chain, a polar monomer grafted into the main chain, and a polar functional group contained in the polar monomer.

The polyolefin resin is selected from the group consisting of polyethylene, polypropylene, an ethylene-α-olefin copolymer, an ethylene-vinyl acetate copolymer, an ethylene-propylene-diene copolymer, and combinations thereof.

The polyethylene may be selected from the group consisting of linear low-density polyethylene, low-density polyethylene, high-density polyethylene, and combinations thereof.

The polar monomer may be selected from the group consisting of maleic anhydride, acrylic acid, glyceryl methacrylate, and combinations thereof.

A reaction initiator may be added during the grafting reaction, and the reaction initiator may be an organic peroxide or the like.

The amount of the polar monomer that is grafted is not particularly limited, but may be 0.1 to 5% by weight based on 100% by weight of the polar polyolefin resin. When the amount of the polar monomer is less than 0.1% by weight, the effect of modifying the polyolefin resin may not be great, and when the amount is higher than 5% by weight, there may be disadvantages of reduced workability and the occurrence of yellowing.

The polar polyolefin resin may have a melting index of 0.5 to 10g/10min (190°C, 2.16 Kgf). When the polar polyolefin resin is less than 0.5g/10min, workability and moldability may be deteriorated, and when the polar polyolefin resin is higher than 10g/10min, mechanical properties such as elongation may be deteriorated.

The content of the polar polyolefin resin is 20 to 40% by weight. When the content is less than 20% by weight, the flame retardancy of the composite resin may be lowered due to deteriorated condensation, and when the content is higher than 40% by weight, the extrusion appearance and workability may be deteriorated.

The highly flame-retardant polymer composite composition may further optionally include an additional polyolefin resin, in addition to the polar polyolefin resin. The additional polyolefin resin may be the same as or different from the polar polyolefin resin. The amount of the additional polyolefin resin that is added is not particularly limited, but is preferably lower than that of the polar polyolefin resin, and is about 10% by weight or less.

### Thermoplastic elastomer

The thermoplastic elastomer is a component for improving the flexibility of the composite resin.

The thermoplastic elastomer is selected from the group consisting of an ethylene-α-olefin copolymer, an ethylene-vinyl acetate copolymer, an ethylene-propylene-diene copolymer, a styrene-ethylene-butadiene-styrene copolymer, styrene-butadiene-styrene, and combinations thereof.

The thermoplastic elastomer may have a melt index of 0.5 to 10 g/10min (190°C, 2.16 Kgf). When the thermoplastic elastomer is less than 0.5g/10min, workability and moldability may be deteriorated, and when the thermoplastic elastomer is higher than 10g/10min, mechanical properties such as elongation may be deteriorated.

The content of the thermoplastic elastomer is 10 to 40% by weight. When the content is less than 10% by weight, a satisfactory degree of flexibility cannot be obtained, and when the content is more than 40% by weight, mechanical properties may be remarkably deteriorated.

### Metal carbonate

The metal carbonate is a component for improving the flame retardancy of the composite resin.

The metal carbonate may be an alkali metal carbonate compound selected from the group consisting of magnesium carbonate, calcium carbonate, and combinations thereof.

The metal carbonate may be coated with silane or stearic acid, but is not limited thereto, and may not be coated therewith. The metal carbonate is used to modify the surface of the metal carbonate to thereby improve compatibility with other compounds.

The metal carbonate may have an average particle diameter of 1 to 20 µm. The average particle diameter can be measured using a commercially available laser-diffraction-scattering particle size distribution analyzer, for example, a micro-track particle size distribution measuring device. In addition, the average particle diameter may be measured by randomly extracting 200 particles from the electron micrograph and calculating the average particle diameter thereof.

The content of the metal carbonate is 30 to 60% by weight. When the content is less than 30% by weight, flame retardancy may be lowered, and when the content is more than 60% by weight, extrusion workability may be lowered.

### Organosilane

The organosilane is a component in which a basic functional group is introduced into the composite resin. Organosilane is condensed with the maleic acid of the polar polyolefin resin. In this process, water is produced, so high flame retardancy corresponding to more than 40% of an oxygen index is obtained.

Patent Document 1 discloses the use of a terpolymer containing an olefin unit, a silane-containing unit and a polar-group-containing unit as a base resin. However, the terpolymer prepared using organosilane as a comonomer has a structure in which the organosilane is grafted into the olefin chain, and thus pre-crosslinking may occur due to hydrolysis and condensation due to water mist after preparation, and a problem in which a protrusion is formed on the surface of the wire that is formed may occur.

Accordingly, in the present invention, in order to solve this problem, the organic silane is added as an independent component instead of being grafted into the base resin.

Specifically, the organosilane is selected from the group consisting of vinyl trimethoxysilane, vinyl triethoxysilane, vinyl tributoxysilane, propyl trimethoxysilane, propyl triethoxysilane, and combinations thereof.

The content of the organosilane is 0.5 to 3% by weight. When the content is less than 0.5% by weight, the flame retardancy of the composite resin may not be improved due to deteriorated acid-base reactions, and when the content is higher than 3% by weight, extrusion workability may be reduced due to the deteriorated melt index.

### Flame retardant

The flame retardant is a component to provide excellent flame retardancy corresponding to 40% or more of an oxygen index of the composite resin.

The flame-retardant polymer composite composition of the invention comprises a sulfur-based flame retardant, which is metal sulfate selected from the group consisting of calcium sulfate, magnesium sulfate, aluminum sulfate, barium sulfate, and combinations thereof.

The content of the sulfur-based flame retardant is 1 to 5% by weight. When the content is less than 1% by weight, the effect of improving flame-retardancy cannot be observed, and when the content is more than 5% by weight, problems of deteriorated appearance after extrusion and of whitening of the wire surface may occur.

The flame retardant may be a composite flame retardant including a sulfur-based flame retardant and a nitrogen-based flame retardant.

The nitrogen-based flame retardant may be melamine cyanurate, the content thereof may be 1 to 5% by weight, and the weight ratio of the sulfur-based flame retardant to the nitrogen-based flame retardant may be 1:0.5 to 1:2.

### Silicone fluid or gum

The silicone fluid or gum is a component that improves the flame retardancy of the composite resin.

The silicone fluid or gum may contain a polydimethylsiloxane (PDMS) material in a low-viscosity fluid state or a high-viscosity gum state.

In addition, the silicone fluid or gum may be used as a raw material, or may be prepared and used in the form of a highly concentrated master batch. When the silicone fluid or gum is prepared and used in the form of a master batch, more desirable effects in terms of stable supply and dispersibility into the extruder can be expected.

The content of the silicone fluid or gum is 0.3 to 5% by weight. When the content is less than 0.3% by weight, flame retardancy may be deteriorated, and when the content is more than 5% by weight, extrusion kneadability may be markedly deteriorated.

### Antioxidant

The antioxidant is a component to prevent oxidation and to improve the heat resistance of the composite resin.

In the present invention, there is no particular limitation on the selection of the antioxidant, so long as it is commonly used in the art, but the antioxidant is preferably selected from a phenolic primary antioxidant, a phosphorus secondary antioxidant, a sulfur secondary antioxidant, and a combination thereof.

The phenolic primary antioxidant may be selected from the group consisting of pentaerythrityl tetrakis(3-(3,5-di-tert-butyl-4-hydroxyphenyl)-propionate), 2,3-bis[[3-[3,5-di-tert-butyl-4-hydroxyphenyl]propionyl]]propionohydrazide, 2,2'-thiodiethylbis-[3-(3,5-di-tert-butyl-4-hyoxyphenyl)-propionate], and combinations thereof.

The phosphorus secondary antioxidant may include tris(2,4-di-tert-butylphenyl)phosphite.

The sulfur secondary antioxidant may include distearyl thiodipropionate.

The content of the antioxidant is 0.1 to 5% by weight. When the content is less than 0.1% by weight, the effects of preventing oxidation and improving heat resistance cannot be expected, and when the content is more than 5% by weight, the problem of whitening due to precipitation thereof on the wire surface may occur.

### Lubricant

The lubricant is a composition to improve the workability of the composite resin.

In the present invention, there is no particular limitation on the selection of the lubricant, so long as it is commonly used in the art, but the lubricant is preferably a low-molecular weight material having a weight average molecular weight of 100 to 1,000, selected from the group consisting of paraffin, polyethylene wax, alkaline earth metal stearate, a vinylidene fluoride-hexafluoropropylene polymer, polyester polyol, erucamide, oleic amide, and combinations thereof.

The content of the lubricant is 0.1 to 5% by weight. When the content is less than 0.1% by weight, the effect of improving workability cannot be expected, and when the content is more than 5% by weight, the dispersion of the mixture may decrease and appearance defects due to generation of low-molecular-weight gas may occur.

The highly flame-retardant polymer composite composition of the present invention may further include additives commonly used in the field of manufacturing insulating materials, and the present invention does not specifically limit the selection or content of such conventional additives. For example, the highly flame-retardant polymer composite composition may further include a conventional colorant in order to impart color to the composite resin, and the colorant may be selected from the group consisting of carbon black, titanium dioxide, pigments, and combinations thereof.

The highly flame-retardant polymer composite resin of the present invention includes the above-described composition.

The method of obtaining the polymer composite resin from the composition is not particularly limited, but the polymer composite resin is preferably obtained by introducing a raw-material mixture, obtained by mixing the composition, into a twin screw extruder, a kneader, a Banbury mixer, or the like, followed by melting.

The highly flame-retardant polymer composite resin has an oxygen index of 40% or more and thus exhibits excellent flame retardancy and also excellent mechanical properties such as elongation. Therefore, the highly flame-retardant polymer composite resin may be applied for various purposes to products requiring insulation or flame retardancy, and a representative example thereof is a cable.

The cable may be manufactured by coating a conductor with an insulating coating layer formed by a composite resin. Specifically, the cable may be manufactured by forming an insulating coating layer with a composite resin prepared by melting the polymer composite composition on a conductor such as copper or aluminum.

In the case of manufacturing a low-voltage cable, only one layer may be coated with a single-layer extruder, and in the case of manufacturing a high-voltage cable, a plurality of layers may be coated with a two-layer or three-layer extruder or the like.

The cable can be stably extruded for a long time due to the excellent high flame retardancy and excellent mechanical properties thereof, as well as the smaller increase in pressure in the extruder during the extrusion-molding process for manufacturing the cable.

As described above, the present invention will be described in more detail with reference to the following examples, but the present invention is not limited thereto.

### Preparation of Composite Resins of Examples 1 to 7 and Comparative Examples 1 to 10

Flame-retardant polymer composite compositions were prepared in accordance with the composition components and composition ratios shown in Tables 1 and 2 below.

The processing equipment used herein was a 30 pie twin screw extruder (L/D 40), and the processing temperature was 150 to 180°C. Specifically, a composite resin was prepared by melting the raw-material mixture, obtained by mixing the respective components, at a temperature of 150 to 180°C.

The components used in the present Examples and Comparative Examples are summarized as follows.

### [Used Ingredients]

(1) Polar polyolefin resin: linear low-density ethylene grafted with 0.5 wt% of maleic anhydride (melting index: 5g/10min)
(2) Polyolefin resin: linear low-density ethylene (melting index: 5g/10min)
(3) Thermoplastic elastomer: ethylene-octene copolymer (melting index: 1g/10min, hardness: Shore A 70)
(4) Metal carbonate: calcium carbonate coated with stearic acid (particle size: 1.5µm)
(5) Organosilane: propyltrimethoxysilane
(6) Sulfur-based flame retardant: calcium sulfate
(7) Nitrogen-based flame retardant: melamine cyanurate
(8) Silicone gum master batch: polydimethylsiloxane 50 wt% masterbatch (carrier resin: polypropylene)
(9) Antioxidant:
   A: Pentaerythrityl tetrakis(3-(3,5-di-tert-butyl-4-hydroxyphenyl)-propionate]
   B: Tris(2,4-di-tert-butylphenyl)phosphite
   C: 2',3-bis[[3-[3,5-di-tert-butyl-4-hydroxyphenyl]propionyl]]propionohydrazide
   D: Distearyl thiodipropionate
(10) Lubricant: zinc stearate

**[Table 1]**

| Component | | Example | | | | | | | |
|---|---|---|---|---|---|---|---|---|---|
| | | 1 | 2 | 3 | 4 | 5 | 6 | 7 | 8 |
| Polar polyolefin resin | | 30 | 20 | 40 | 30 | 30 | 30 | 30 | 28.5 |
| Polyolefin resin | | - | 10 | - | - | - | - | - | - |
| Thermoplastic elastomer | | 17.7 | 17.7 | 7.7 | 18.7 | 16.2 | 19.7 | 15.7 | 16.2 |
| Metal carbonate | | 45 | 45 | 45 | 45 | 45 | 45 | 45 | 45 |
| Organosilane | | 1.5 | 1.5 | 1.5 | 0.5 | 3 | 1.5 | 1.5 | 1.5 |
| Sulfur-based flame retardant | | 3 | 3 | 3 | 3 | 3 | 1 | 5 | 3 |
| Nitrogen-based flame retardant | | - | - | - | - | - | - | - | 3 |
| Silicone gum | | 2 | 2 | 2 | 2 | 2 | 2 | 2 | 2 |
| Antioxidant | A | 0.2 | 0.2 | 0.2 | 0.2 | 0.2 | 0.2 | 0.2 | 0.2 |
| | B | 0.1 | 0.1 | 0.1 | 0.1 | 0.1 | 0.1 | 0.1 | 0.1 |
| | C | 0.1 | 0.1 | 0.1 | 0.1 | 0.1 | 0.1 | 0.1 | 0.1 |
| | D | 0.1 | 0.1 | 0.1 | 0.1 | 0.1 | 0.1 | 0.1 | 0.1 |
| Lubricant | | 0.3 | 0.3 | 0.3 | 0.3 | 0.3 | 0.3 | 0.3 | 0.3 |
| Total (wt%) | | 100 | 100 | 100 | 100 | 100 | 100 | 100 | 100 |

**[Table 2]**

| Component | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Polar polyolefin resin | | 10 | 47.8 | 30 | 30 | 20 | 30 | 30 | 30 | 30 | 30 | 5 | 30 |
| Polyolefin resin | | 20 | - | 17.7 | 25.1 | - | - | - | - | - | - | 32.2 | 20.7 |
| Thermoplastic elastomer | | 17.7 | - | - | 17.7 | 7.7 | 19 | 15.2 | 20.2 | 13.7 | 19.7 | 20 | - |
| Metal carbonate | | 45 | 45 | 45 | 20 | 65 | 45 | 45 | 45 | 45 | 45 | - | 45 |
| Organosilane | | 1.5 | 1.5 | 1.5 | 1.5 | 1.5 | 0.2 | 4 | 1.5 | 1.5 | 1.5 | - | 1.5 |
| Sulfur-based flame retardant | | 3 | 3 | 3 | 3 | 3 | 3 | 3 | 0.5 | 7 | 3 | - | - |
| Nitrogen-based flame retardant | | - | - | - | - | - | - | - | - | - | - | 40 | - |
| Silicone gum | | 2 | 2 | 2 | 2 | 2 | 2 | 2 | 2 | 2 | - | 2 | 2 |
| Antioxidant | A | 0.2 | 0.1 | 0.2 | 0.1 | 0.2 | 0.2 | 0.2 | 0.2 | 0.2 | 0.2 | 0.2 | 0.2 |
| | B | 0.1 | 0.1 | 0.1 | 0.1 | 0.1 | 0.1 | 0.1 | 0.1 | 0.1 | 0.1 | 0.1 | 0.1 |
| | C | 0.1 | 0.1 | 0.1 | 0.1 | 0.1 | 0.1 | 0.1 | 0.1 | 0.1 | 0.1 | 0.1 | 0.1 |
| | D | 0.1 | 0.1 | 0.1 | 0.1 | 0.1 | 0.1 | 0.1 | 0.1 | 0.1 | 0.1 | 0.1 | 0.1 |
| Lubricant | | 0.3 | 0.3 | 0.3 | 0.3 | 0.3 | 0.3 | 0.3 | 0.3 | 0.3 | 0.3 | 0.3 | 0.3 |
| Total (wt%) | | 100 | 100 | 100 | 100 | 100 | 100 | 100 | 100 | 100 | 100 | 100 | 100 |

### Experimental Example

The respective compositions prepared in Examples 1 to 4 and Comparative Examples 1 to 4 were produced into specimens, and the physical properties thereof were measured.

The melt index (ASTM D1238), specific gravity (ASTM D1605), hardness (ASTM D2240), oxygen index (ASTM D2863), tensile strength, and elongation (ASTM D638) of the produced specimens were observed. In addition, changes in tensile strength and elongation were measured after aging in an oven (105°C/7 days) to evaluate heat resistance. Finally, a rod die was mounted on a single extruder, and then the appearance after high-speed extrusion was evaluated. The results are shown in Table 3 below.

**[Table 3]**

| Item | | Melt index [g/10cm] | Specific gravity [g/cm³] | Hardness [Shore D] | Tensile strength [Kg/cm²] | Elongation [%] | Oxygen index [%] | Extrusion appearance |
|---|---|---|---|---|---|---|---|---|
| Example | 1 | 0.5 | 1.31 | 45 | 120 | 300 | 47 | Good |
| | 2 | 1.1 | 1.30 | 45 | 130 | 350 | 42 | Good |
| | 3 | 0.3 | 1.30 | 48 | 105 | 220 | 45 | Good |
| | 4 | 1.3 | 1.30 | 45 | 110 | 400 | 41 | Good |
| | 5 | 0.3 | 1.31 | 46 | 125 | 210 | 44 | Good |
| | 6 | 0.8 | 1.29 | 44 | 130 | 450 | 44 | Good |
| | 7 | 0.2 | 1.34 | 47 | 105 | 250 | 45 | Good |
| | 8 | 0.4 | 1.32 | 46 | 115 | 270 | 48 | Good |
| Comparative Example | 1 | 1.5 | 1.31 | 45 | 125 | 380 | 37 | Good |
| | 2 | 0.3 | 1.29 | 52 | 135 | 50 | 44 | Poor |
| | 3 | 0.7 | 1.29 | 51 | 130 | 90 | 41 | Poor |
| | 4 | 1.3 | 1.10 | 48 | 140 | 230 | 32 | Good |
| | 5 | 0.05 | 1.49 | 49 | 100 | 40 | 38 | Poor |
| | 6 | 1.6 | 1.30 | 44 | 105 | 350 | 37 | Good |
| | 7 | 0.1 | 1.31 | 46 | 130 | 90 | 43 | Poor |
| | 8 | 0.7 | 1.29 | 44 | 125 | 420 | 37 | Good |
| | 9 | 0.05 | 1.37 | 48 | 90 | 70 | 43 | Poor |
| | 10 | 0.3 | 1.31 | 46 | 125 | 210 | 39 | Poor |
| | 11 | 1.0 | 1.15 | 45 | 120 | 350 | 30 | Good |
| | 12 | 0.6 | 1.29 | 45 | 125 | 300 | 28 | Good |
| Required value | | 0.1 or more | - | 40-55 | 100 or more | 150 or more | 40 or more | Good |

As can be seen from Table 3, the polymer composite resin according to the embodiment satisfies both an oxygen index of 40% or more and an elongation of 150% or more. In addition, the polymer composite resin has an excellent appearance after extrusion. This shows that the present invention enables a highly flame-retardant polymer composite resin having excellent flame retardancy and mechanical properties and a good appearance to be obtained.

Meanwhile, in Comparative Example 1, desirable flame retardancy was not realized due to the excessively low content of the polar polyolefin resin. On the other hand, in Comparative Example 2, the appearance and elongation were lowered due to the excessively high content of the polar polyolefin resin.

Comparative Example 3 exhibited poor elongation and appearance due to the absence of the thermoplastic elastomer.

In Comparative Example 4, the oxygen index was lower than 40% due to the low content of the metal carbonate. In addition, Comparative Example 5 exhibited remarkably low elongation and insufficient flame retardancy due to the high content of metal carbonate.

Comparative Example 6 exhibited insufficient flame retardancy due to the low organosilane content, and Comparative Example 7 exhibited deteriorated elongation and appearance due to the high content of organosilane.

Comparative Example 8 had an oxygen index lower than 40% due to the low content of the sulfur-based flame retardant, and Comparative Example 9 did not satisfy the requirements for elongation and tensile strength due to the high content of the sulfur-based flame retardant.

Comparative Example 10 exhibited poor flame retardancy and appearance due to the absence of silicone gum.

Comparative Example 11 is the flame-retardant resin composition according to Korean Patent 10-1542110, and Comparative Example 12 is the flame-retardant polymer composition according to Korean Patent Laid-open Publication No. 10-2014-0139064. As can be seen from Table 3 above, the compositions according to Comparative Example 11 and Comparative Example 12 had oxygen indexes of 30% and 28%, respectively, and had remarkably lower flame retardancy than the polymer composite resin according to Examples.

Preferred embodiments of the present invention have been described in detail. Those skilled in the art will appreciate that the experimental examples are provided to set forth preferred embodiments for illustrative purposes, and that changes may be made in a variety of resins and products without departing from the principle or spirit of the present invention.
Thus, the scope of the present invention is defined by the claims set forth below, and the meanings of the claims fall within the scope of the present invention.

## Claims

1. A flame-retardant polymer composite composition comprising:
20 to 40% by weight of a polar polyolefin resin;
10 to 40% by weight of a thermoplastic elastomer;
30 to 60% by weight of a metal carbonate;
0.5 to 3% by weight of an organosilane;
1 to 5% by weight of a sulfur-based flame retardant;
0.3 to 5% by weight of a silicone fluid or gum;
0.1 to 5% by weight of an antioxidant; and
0.1 to 5% by weight of a lubricant,
wherein the polar polyolefin resin comprises:
a polyolefin resin selected from the group consisting of polyethylene, polypropylene, an ethylene-α-olefin copolymer, an ethylene-vinyl acetate copolymer, an ethylene-propylene-diene copolymer, and combinations thereof; and a polar functional group, and
wherein the thermoplastic elastomer is selected from the group consisting of an ethylene-α-olefin copolymer, an ethylene-vinyl acetate copolymer, an ethylene-propylene-diene copolymer, a styrene-ethylene-butadiene-styrene copolymer, styrene-butadiene-styrene, and combinations thereof, and
wherein the organosilane is selected from the group consisting of vinyl trimethoxysilane, vinyl triethoxysilane, vinyl tributoxysilane, propyl trimethoxysilane, propyl triethoxysilane, and combinations thereof, and
wherein the sulfur-based flame retardant is metal sulfate selected from the group consisting of calcium sulfate, magnesium sulfate, aluminum sulfate, barium sulfate, and combinations thereof.

2. The flame-retardant polymer composite composition according to claim 3, wherein the polar polyolefin resin has a structure in which a polar monomer selected from the group consisting of maleic anhydride, acrylic acid, glyceryl methacrylate, and combinations thereof is grafted into the polyolefin resin.

3. The flame-retardant polymer composite composition according to claim 1, wherein the metal carbonate is selected from the group consisting of magnesium carbonate, calcium carbonate and combinations thereof.

4. The flame-retardant polymer composite composition according to claim 1, further comprising: a nitrogen-based flame retardant.

5. The flame-retardant polymer composite composition according to claim 1, wherein the silicone fluid or gum is polydimethylsiloxane, and is used in the form of a raw material or a master batch.

6. The flame-retardant polymer composite composition according to claim 1, wherein the antioxidant is selected from the group consisting of:
phenolic antioxidants selected from the group consisting of pentaerythrityl tetrakis(3-(3,5-di-tert-butyl-4-hydroxyphenyl)-propionate), 2,3-bis[[3-[3,5-di-tert-butyl-4-hydroxyphenyl]propionyl]]propionohydrazide, 2,2'-thiodiethylbis-[3-(3,5-di-tert-butyl-4-hydroxyphenyl)-propionate] and combinations thereof;
phosphorus-based antioxidants including tris(2,4-di-tert-butylphenyl)phosphite;
sulfur-based antioxidants including distearyl thiodipropionate; and
combinations thereof.

7. The flame-retardant polymer composite composition according to claim 1, wherein the lubricant is selected from the group consisting of paraffin, polyethylene wax, alkaline earth metal stearate, a vinylidene fluoride-hexafluoropropylene polymer, polyester polyol, erucamide, oleic amide, and combinations thereof.

8. The flame-retardant polymer composite composition according to claim 1, further comprising:
a colorant selected from the group consisting of carbon black, titanium dioxide, pigments, and combinations thereof.

9. The flame-retardant polymer composite composition according to claim 1, wherein the flame-retardant polymer composite composition comprises:
20 to 40% by weight of the polar polyolefin resin, which is polyethylene grafted with maleic anhydride;
10 to 40% by weight of the thermoplastic elastomer, which is an ethylene-octene copolymer;
30 to 60% by weight of the metal carbonate, which is calcium carbonate coated with stearic acid;
0.5 to 3% by weight of the organosilane, which is vinyltrimethoxysilane;
1 to 5% by weight of the calcium sulfate;
0.3 to 5% by weight of the silicone fluid or gum, which is polydimethylsiloxane in the form of the master batch;
0.1 to 5% by weight of the antioxidant including pentaerythrityl tetrakis, tris(2,4-di-tert-butylphenyl)phosphite, 2,3-bis[[3-[3,5-di-tert-butyl-4-hydroxyphenyl]propyl]]propionohydrazide and distearyl thiodipropionate; and
0.1 to 5% by weight of the lubricant, which is zinc stearate.

10. A flame-retardant polymer composite resin comprising the composition according to claim 1.

11. The flame-retardant polymer composite resin according to claim 15, wherein the flame-retardant polymer composite resin has an elongation of 150% or more, when measured according to ASTM D2863, and an oxygen index of 40% or more, when measured according to ASTM D638.

## Patentansprüche

1. Flammhemmende Polymer-Verbundstoffzusammensetzung, umfassend:
20 bis 40 Gew.-% eines polaren Polyolefinharzes,
10 bis 40 Gew.-% eines thermoplastischen Elastomers,
30 bis 60 Gew.-% eines Metallcarbonats,
0,5 bis 3 Gew.-% eines Organosilans,
1 bis 5 Gew.-% eines Flammschutzmittels auf Schwefelbasis,
0,3 bis 5 Gew.-% einer Silikonflüssigkeit oder eines Silikongummis,
0,1 bis 5 Gew.-% eines Antioxidationsmittels, und
0,1 bis 5 Gew.-% eines Schmiermittels,
wobei das polare Polyolefinharz umfasst:
ein Polyolefinharz, ausgewählt aus der Gruppe, bestehend aus Polyethylen, Polypropylen, einem Ethylen-α-Olefin-Copolymer, einem Ethylen-Vinylacetat-Copolymer, einem Ethylen-Propylen-Dien-Copolymer und Kombinationen davon, und eine polare funktionelle Gruppe, und
wobei das thermoplastische Elastomer ausgewählt ist aus der Gruppe, bestehend aus einem Ethylen-α-Olefin-Copolymer, einem Ethylen-Vinylacetat-Copolymer, einem Ethylen-Propylen-Dien-Copolymer, einem Styrol-Ethylen-Butadien-Styrol-Copolymer, Styrol-Butadien-Styrol und Kombinationen davon, und
wobei das Organosilan ausgewählt ist aus der Gruppe bestehend aus Vinyltrimethoxysilan, Vinyltriethoxysilan, Vinyltributoxysilan, Propyltrimethoxysilan, Propyltriethoxysilan und Kombinationen davon, und
wobei das Flammschutzmittel auf Schwefelbasis ein Metallsulfat ist, ausgewählt aus der Gruppe bestehend aus Calciumsulfat, Magnesiumsulfat, Aluminiumsulfat, Bariumsulfat und Kombinationen davon.

2. Flammhemmende Polymer-Verbundstoffzusammensetzung nach Anspruch 1, wobei das polare Polyolefinharz eine Struktur aufweist, bei der ein polares Monomer, ausgewählt aus der Gruppe, bestehend aus Maleinsäureanhydrid, Acrylsäure, Glycerinmethacrylat und Kombinationen davon, auf das Polyolefinharz aufgepfropft ist.

3. Flammhemmende Polymer-Verbundstoffzusammensetzung nach Anspruch 1, wobei das Metallcarbonat aus der Gruppe ausgewählt ist, bestehend aus Magnesiumcarbonat, Calciumcarbonat und Kombinationen davon.

4. Flammhemmende Polymer-Verbundstoffzusammensetzung nach Anspruch 1, die ferner umfasst:
ein flammhemmendes Mittel auf Stickstoffbasis.

5. Flammhemmende Polymer-Verbundstoffzusammensetzung nach Anspruch 1, wobei das Silikonfluid oder Silikongummi Polydimethylsiloxan ist und in Form eines Rohmaterials oder eines Masterbatches verwendet wird.

6. Flammhemmende Polymer-Verbundstoffzusammensetzung nach Anspruch 1, wobei das Antioxidationsmittel ausgewählt ist aus der Gruppe, bestehend aus:
phenolischen Antioxidationsmitteln, ausgewählt aus der Gruppe, bestehend aus Pentaerythrityltetrakis(3-(3,5-di-tert-Butyl-4-hydroxyphenyl)-propionat), 2,3-Bis-[[3-[3,5-di-tert-Butyl-4-hydroxyphenyl]propionyl]]propionohydrazid, 2,2'-Thiodiethylbis-[3-(3,5-di-tert-Butyl-4-hydroxyphenyl)-propionat] und Kombinationen davon,
Antioxidationsmitteln auf Phosphorbasis, einschließlich Tris(2,4-di-tert-butylphenyl)phosphit,
Antioxidationsmitteln auf Schwefelbasis, einschließlich Distearylthiodipropionat, und
Kombinationen davon.

7. Flammhemmende Polymer-Verbundstoffzusammensetzung nach Anspruch 1, wobei das Schmiermittel aus der Gruppe ausgewählt ist, bestehend aus Paraffin, Polyethylenwachs, Erdalkalimetallstearat, einem Vinylidenfluorid-Hexafluorpropylen-Polymer, Polyesterpolyol, E-rucamid, Ölsäureamid und Kombinationen davon.

8. Flammhemmende Polymer-Verbundstoffzusammensetzung nach Anspruch 1, ferner umfassend:
ein Farbmittel, ausgewählt aus der Gruppe, bestehend aus Ruß, Titandioxid, Pigmenten und Kombinationen davon.

9. Flammhemmende Polymer-Verbundstoffzusammensetzung nach Anspruch 1, wobei die flammhemmende Polymer-Verbundstoffzusammensetzung umfasst:
20 bis 40 Gew.-% des polaren Polyolefinharzes, das mit Maleinsäureanhydrid gepfropftes Polyethylen ist,
10 bis 40 Gew.-% des thermoplastischen Elastomers, das ein Ethylen-Octen-Copolymer ist,
30 bis 60 Gew.-% des Metallcarbonats, bei dem es sich um mit Stearinsäure beschichtetes Calciumcarbonat handelt,
0,5 bis 3 Gew.-% des Organosilans, das Vinyltrimethoxysilan ist,
1 bis 5 Gew.-% des Calciumsulfats,
0,3 bis 5 Gew.-% des Siliconöls oder -gummis, bei dem es sich um Polydimethylsiloxan in Form des Masterbatches handelt,
0,1 bis 5 Gew.-% des Antioxidationsmittels, welches Pentaerythrityltetrakis, Tris(2,4-di-tert-butylphenyl)phosphit, 2,3-Bis[[3-[3,5-di-tert-butyl-4-hydroxyphenyl]propyl]]propionohydrazid und Distearylthiodipropionat umfasst, und
0,1 bis 5 Gew.-% des Schmiermittels, das Zinkstearat ist.

10. Flammhemmendes Polymer-Verbundstoffharz, das die Zusammensetzung nach Anspruch 1 enthält.

11. Flammhemmendes Polymer-Verbundstoffharz nach Anspruch 15, wobei das flammhemmende Polymer-Verbundstoffharz eine Dehnung von 150% oder mehr, gemessen nach ASTM D2863, und einen Sauerstoffindex von 40% oder mehr, gemessen nach ASTM D638, aufweist.

## Revendications

1. Composition composite de polymère ignifuge comprenant :
20 à 40% en poids d'une résine de polyoléfine polaire ;
10 à 40% en poids d'un élastomère thermoplastique ;
30 à 60% en poids d'un carbonate de métal ;
0,5 à 3% en poids d'un organosilane ;
1 à 5% en poids d'un ignifugeant à base de soufre ;
0,3 à 5% en poids d'un fluide ou d'une gomme de silicone ;
0,1 à 5% en poids d'un antioxydant ; et
0,1 à 5% en poids d'un lubrifiant ;
dans laquelle la résine de polyoléfine polaire comprend :
une résine de polyoléfine choisie dans le groupe constitué par le polyéthylène, le polypropylène, un copolymère éthylène-α-oléfine, un copolymère éthylène-acétate de vinyle, un copolymère éthylène-propylène-diène, et les combinaisons de ceux-ci ; et un groupe fonctionnel polaire, et
dans laquelle l'élastomère thermoplastique est choisi dans le groupe constitué par un copolymère éthylène-α-oléfine, un copolymère éthylène-acétate de vinyle, un copolymère éthylène-propylène-diène, un copolymère styrène-éthylène-butadiène-styrène, styrène-butadiène-styrène, et les combinaisons de ceux-ci, et
dans laquelle l'organosilane est choisi dans le groupe constitué par le vinyltriméthoxysilane, le vinyltriéthoxysilane, le vinyltributoxysilane, le propyltriméthoxysilane, le propyltriéthoxysilane, et les combinaisons de ceux-ci, et
dans laquelle l'ignifugeant à base de soufre est un sulfate de métal choisi dans le groupe constitué par le sulfate de calcium, le sulfate de magnésium, le sulfate d'aluminium, le sulfate de baryum, et les combinaisons de ceux-ci.

2. Composition composite de polymère ignifuge selon la revendication 1, dans laquelle la résine de polyoléfine polaire possède une structure dans laquelle un monomère polaire choisi dans le groupe constitué par l'anhydride maléique, l'acide acrylique, le méthacrylate de glycéryle, et les combinaisons de ceux-ci, est greffé dans la résine de polyoléfine.

3. Composition composite de polymère ignifuge selon la revendication 1, dans laquelle le carbonate de métal est choisi dans le groupe constitué par le carbonate de magnésium, le carbonate de calcium et les combinaisons de ceux-ci.

4. Composition composite de polymère ignifuge selon la revendication 1, comprenant en outre :
un ignifugeant à base d'azote.

5. Composition composite de polymère ignifuge selon la revendication 1, dans laquelle le fluide ou la gomme de silicone est du polydiméthylsiloxane, et est utilisé sous forme d'une matière première ou d'un mélange maître.

6. Composition composite de polymère ignifuge selon la revendication 1, dans laquelle l'antioxydant est choisi dans le groupe constitué par :
les antioxydants phénoliques choisis dans le groupe constitué par le tétrakis(3-(3,5-di-tert-butyl-4-hydroxyphényl)propionate) de pentaérythrityle, le 2,3-bis[[3-[3,5-di-tert-butyl-4-hydroxyphényl]-propionyl]]propionohydrazide, le 2,2'-thiodiéthylbis-[3-(3,5-di-tert-butyl-4-hydroxyphényl)propionate] et les combinaisons de ceux-ci ;
les antioxydants à base de phosphore y compris le tris(2,4-di-tert-butylphényl)phosphite ;
les antioxydants à base de soufre y compris le thiodipropionate de distéaryle ; et
les combinaisons de ceux-ci.

7. Composition composite de polymère ignifuge selon la revendication 1, dans laquelle le lubrifiant est choisi dans le groupe constitué par la paraffine, la cire de polyéthylène, le stéarate de métal alcalino-terreux, un polymère de fluorure de vinylidène-hexafluoropropylène, un polyester polyol, l'érucamide, un amide oléique, et les combinaisons de ceux-ci.

8. Composition composite de polymère ignifuge selon la revendication 1, comprenant en outre :
un colorant choisi dans le groupe constitué par le noir de carbone, le dioxyde de titane, les pigments, et les combinaisons de ceux-ci.

9. Composition composite de polymère ignifuge selon la revendication 1, ladite composition composite de polymère ignifuge comprenant :
20 à 40% en poids de la résine de polyoléfine polaire, qui est un polyéthylène greffé d'anhydride maléique ;
10 à 40% en poids de l'élastomère thermoplastique, qui est un copolymère éthylène-octène ;
30 à 60% en poids du carbonate de métal, qui est un carbonate de calcium enduit d'acide stéarique ;
0,5 à 3% en poids de l'organosilane, qui est le vinyltriméthoxysilane ;
1 à 5% en poids du sulfate de calcium ;
0,3 à 5% en poids du fluide ou de la gomme de silicone, qui est du polydiméthylsiloxane sous forme de mélange maître ;
0,1 à 5% en poids de l'antioxydant, y compris le pentaérythrityle tétrakis, le tris(2,4-di-tert-butylphényl)phosphite, le 2,3-bis[[3-[3,5-di-tert-butyl-4-hydroxyphényl]propyl]]propionohydrazide et le thiodipropionate de distéaryle ; et
0,1 à 5% en poids du lubrifiant, qui est le stéarate de zinc.

10. Résine composite de polymère ignifuge comprenant la composition selon la revendication 1.

11. Résine composite de polymère ignifuge selon la revendication 10, ladite résine composite de polymère ignifuge ayant une élongation de 150 % ou plus, mesurée selon la norme ASTM D2863, et un indice d'oxygène de 40% ou plus, mesuré selon la norme ASTM D638.
